# EUROPEAN PATENT SPECIFICATION

(11) **EP 2 221 218 B1**
(45) Date of publication and mention of the grant of the patent: **31.07.2013**
(21) Application number: 10154081.3
(22) Date of filing: 19.02.2010
(51) Int. Cl.: B60Q 1/08, B60Q 1/14

(54) **Vehicular headlamp**
Fahrzeugscheinwerfer
Phare de véhicule

(30) Priority: 20.02.2009 JP 2009038518
(43) Date of publication of application: 25.08.2010
(73) Proprietor: Koito Manufacturing Co., Ltd., Tokyo 108-8711 (JP)
(72) Inventor: Komatsu, Motohiro c/o KOITO MANUFACTURING CO., LTD., Shizuoka-shi Shizuoka (JP)
(74) Representative: HOFFMANN EITLE

(56) References cited:
- FR-A5- 2 088 708
- JP-A- 2008 037 240
- US-A1- 2005 180 153
- US-A1- 2006 023 465
- US-A1- 2008 101 077

## Description

### [Technical Field]

The present invention relates to a vehicular headlamp. In particular, the present invention relates to a technical field in which a light distribution pattern is selectively changed by individually controlling a first lamp unit and a second lamp unit to secure an optimum radiation state according to the situation without increasing the production cost.

### [Related Art]

In some vehicular headlamps, a plurality of light sources are provided and individually controlled to turn on and off in order to form a desired light distribution pattern according to the situation (see Patent Document I, for example).

In a vehicular headlamp disclosed in Patent Document 1, three light-emitting diodes (LEDs) are used as light sources to form various radiation patterns of a high-beam light distribution pattern for long-distance radiation.

That is, a first light-emitting diode forms a left radiation pattern, a second light-emitting diode form a center radiation pattern, and a third light-emitting diode forms a right radiation pattern.
[Patent Document 1]
   Japanese Patent Application Laid-Open (Kokai) No. JP-A-2007-179969

FR 2 088 708 A5 discloses a vehicular lamp comprising a first and a second lamp unit, wherein the intensity of light emitted by the lamp is successively reduced as an oncoming vehicle approaches.

### [Disclosure of the Invention]

### [Problem to be Solved by the Invention]

However, the vehicular headlamp disclosed in Patent Document 1 requires the same number of light-emitting diodes as the number of radiation patterns since the various radiation patterns of the high-beam light distribution pattern are formed by the respective light-emitting diodes. This problematically increases the production cost accordingly.

In order to improve the visibility, the center radiation pattern requires a light intensity higher than the light intensity of the left and right radiation patterns. It is thus necessary to provide a plurality of light-emitting chips as the second light-emitting diode, which further increases the production cost.

In view of the above, it is an object of the present invention to secure an optimum radiation state according to the situation without increasing the production cost.

### [Means for Solving the Problem]

In order to achieve the foregoing object, the present invention provides a vehicular headlamp according to claim 1.

Thus, with the vehicular headlamp, light emitted from the first light source forms a light distribution pattern of the high beam that is generally at the center portion in the lateral direction.

### [Effects of the Invention]

A vehicular headlamp according to the present invention includes: a first lamp unit that selectively radiates a dual-distance beam for radiating a close area and a far area or a low beam for radiating a close area forwardly from a first light source; and a second lamp unit that radiates a high beam for radiating a far area forwardly from a second light source in which a light-emitting diode is used, and is **characterized in that**: a light distribution pattern of the dual-distance beam for radiating the far area is formed at a position corresponding to a generally center portion in a lateral direction of a light distribution pattern of the dual-distance beam for radiating the close area; at least a part of a light distribution pattern of the high beam is formed on at least one of left and right sides of the light distribution pattern of the dual-distance beam for radiating the far area; and the second light source is turned on or off when the first light source is turned on.

Thus, light emitted from the first light source which radiates a low beam forms the light distribution pattern of the dual-distance beam for radiating the far area. Therefore, it is possible to prevent an increase in the number of light-emitting diodes for forming light distribution patterns for radiating the far area, and to secure an optimum radiation state according to the situation without increasing the production cost.

In the invention two second light sources are provided; the two second light sources radiate the high beam to different areas; and the two second light sources are individually controlled to turn on and off.

Thus, it is possible to secure an optimum radiation state according to the situation with an increased number of light distribution patterns.

In the invention according to claim 2, a discharge lamp is used as the first light source; and the first lamp unit includes a projection lens that projects light emitted from the first light source to radiate the light forwardly and a reflector that reflects light emitted from the first light source to direct the light to the projection lens.

Thus, it is possible to secure a high light intensity necessary for the light distribution patterns without increasing the production cost.

### [Best Mode for Carrying Out the Invention]

Hereafter, the best mode for carrying out a vehicular headlamp according to the present invention will be described with reference to accompanying drawings.
FIG. 1 is a schematic horizontal cross-sectional view of a vehicular headlamp, showing the best mode for carrying out the invention in conjunction with FIGS. 2 to 4;
FIG. 2 is a schematic vertical cross-sectional view of a first lamp unit;
FIG. 3 is a conceptual diagram showing light distribution patterns; and
FIG. 4 is a table showing a variety of light distribution patterns to be formed.

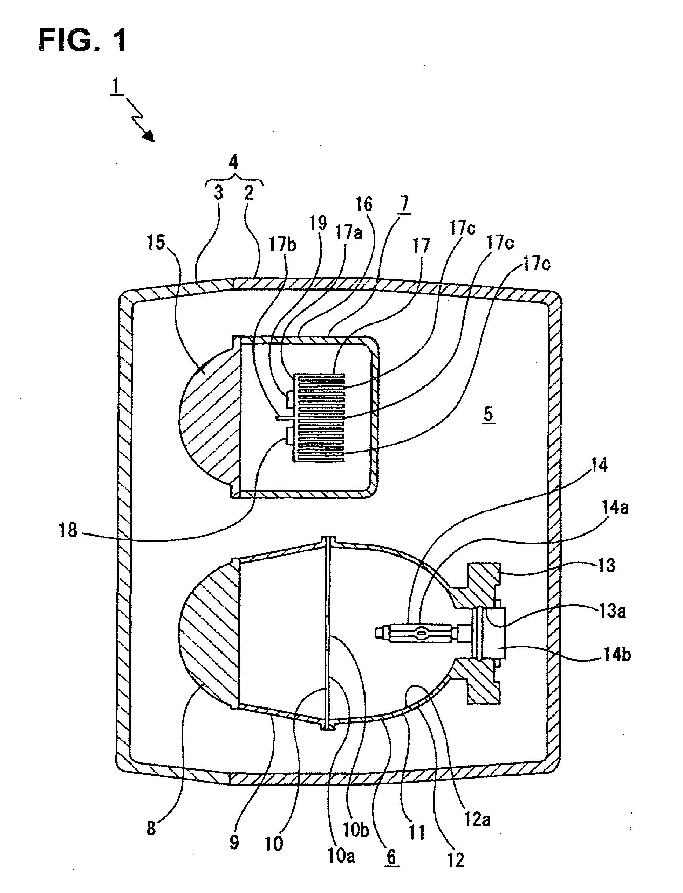

As shown in FIG. 1, a vehicular headlamp 1 includes a lamp body 2 having a recess that opens forwardly and a cover 3 that closes the opening of the lamp body 2. The lamp body 2 and the cover 3 form a lamp outer shell 4. A lamp chamber 5 is formed inside the lamp outer shell 4.

A first lamp unit 6 and a second lamp unit 7 are disposed in the lamp chamber 5 separately from each other on the left and right sides. The first lamp unit 6 and the second lamp unit 7 are supported on the lamp body 2 by a light axis adjustment mechanism (not shown) so as to be tiltable.

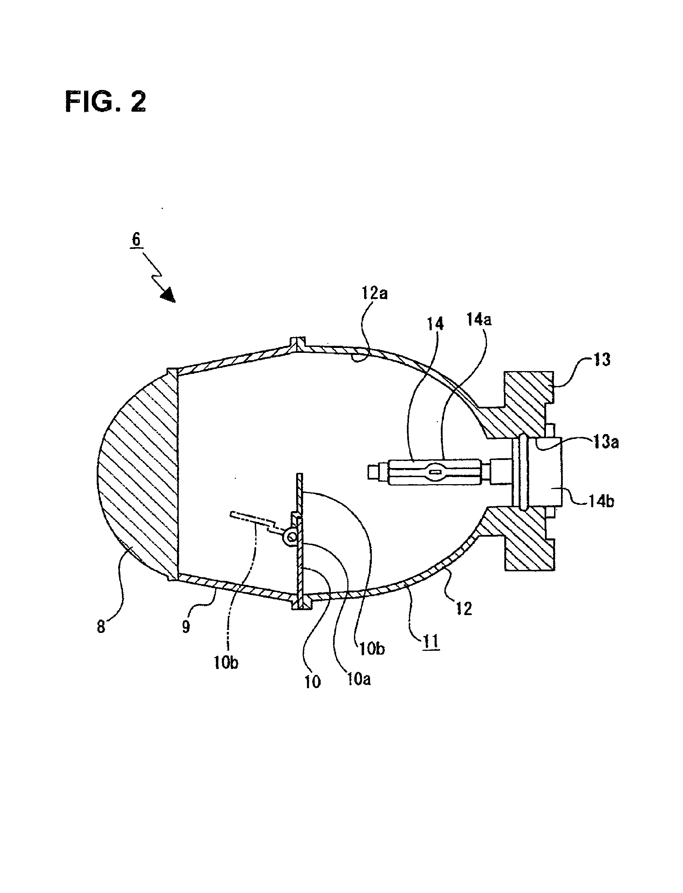

The first lamp unit 6 is a so-called projector-type lamp unit and includes a projection lens 8, a lens holder 9, a shade 10, and a reflector 11 (see FIGS. 1 and 2).

The projection lens 8 is formed generally in the shape of a hemisphere that is forwardly convex, for example.

The lens holder 9 is formed in a generally cylindrical shape. The projection lens 8 is retained by the lens holder 9 with the outer peripheral portion of the projection lens 8 mounted to the front end surface of the lens holder 9.

The shade 10 is formed in the shape of a plate that faces in the front-back direction, for example, with the lower end portion thereof mounted to the rear end surface of the lens holder 9. The shade 10 includes a stationary portion 10a and a movable portion 10b. The movable portion 10b is supported by the stationary portion 10a so as to be turnable about the lower end portion of the movable portion 10b (see FIG. 2).

The reflector 11 is disposed in rear of the lens holder 9 (see FIGS. 1 and 2). The reflector 11 includes a reflective portion 12 formed generally in the shape of a bowl that opens forwardly and a light source supporting portion 13 that protrudes rearwardly from the rear end of the reflective portion 12.

The inner surface of the reflective portion 12 is formed as a reflective surface 12a.

A supporting hole 13a is formed to penetrate the light source supporting portion 13 in the front-back direction. A part of a first light source 14 is inserted into the supporting hole 13a to be retained.

The first light source 14 is a light source that is different from a light-emitting diode, for example a discharge lamp, and includes a light-emitting portion 14a and a mount portion 14b. The mount portion 14b of the first light source 14 is mounted to the light source supporting portion 13.

When light is emitted from the light-emitting portion 14a of the first light source 14 in the first lamp unit 6, the emitted light is reflected by the reflective surface 12a of the reflector 11 and passes sequentially through the projection lens 8 and the cover 3 to be radiated forwardly.

The degree to which the light emitted from the light-emitting portion 14a is blocked is varied in accordance with the position of the movable portion 10b of the shade 10 relative to the stationary portion 10a. In the state in which the movable portion 10b is not turned with respect to the stationary portion 10a (the state indicated by the solid line in FIG. 2), the light emitted from the light-emitting portion 14a is radiated forwardly as a low beam for radiating a close area. In the state in which the movable portion 10b is turned forwardly with respect to the stationary portion 10a (the state indicated by the broken line in FIG. 2), the light emitted from the light-emitting portion 14a is radiated forwardly as a dual-distance beam for radiating a close area and a far area.

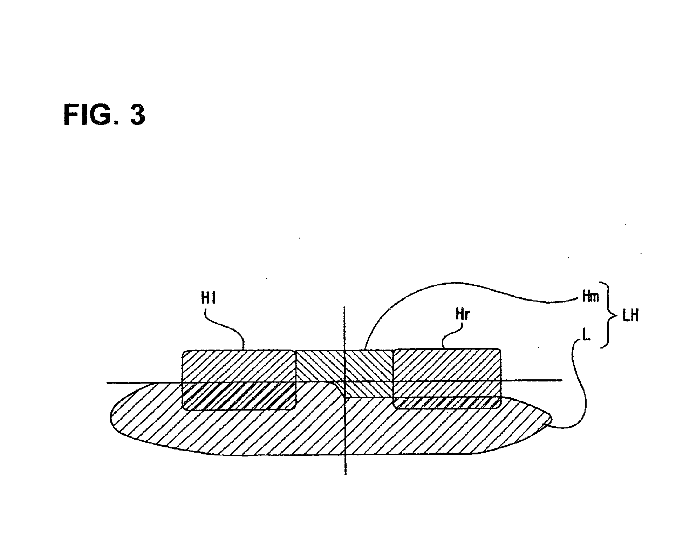

Thus, as shown in FIG. 3, the low beam forms a low-beam light distribution pattern L in the state in which the movable portion 10b is not turned with respect to the stationary portion 10a, and the dual-distance beam forms a dual-beam light distribution pattern LH, which is obtained by synthesizing the low-beam light distribution pattern L and a center high-beam light distribution pattern Hm, in the state in which the movable portion 10b is turned forwardly with respect to the stationary portion 10a.

The center high-beam light distribution pattern Hm is formed at a position corresponding to the center portion in the lateral direction of the low-beam light distribution pattern L.

The second lamp unit 7 includes a lens 15 and a housing 16 (see FIG. 1).

The lens 15 is formed generally in the shape of a hemisphere that is forwardly convex, for example.

The housing 16 is formed in the shape of a box that opens forwardly with the outer peripheral portion of the lens 15 mounted to the front end surface of the housing 16.

A heat radiation member 17 is disposed inside the housing 16. The heat radiation member 17 includes an arrangement base 17a formed in the shape of a plate that faces in the front-back direction, a partition wall 17b protruding forwardly from the center portion of the arrangement base 17a in the lateral direction, and a plurality of heat radiation fins 17c, 17c, ... protruding rearwardly from the arrangement base 17a.

Second light sources 18, 19 are disposed on the front surface of the arrangement base 17a of the heat radiation member 17 on the left and right sides, respectively, of the partition wall 17b. A light-emitting diode (LED) is used as the second light sources 18, 19.

Light emitted from the second light sources 18, 19 is directed forwardly as a high beam for radiating a far area. As shown in FIG. 3, light emitted from the second light source 18 positioned on the left side forms a left high-beam light distribution pattern Hl, and light emitted from the second light source 19 positioned on the right side forms a right high-beam light distribution pattern Hr.

The left high-beam light distribution pattern Hl and the right high-beam light distribution pattern Hr are formed on the left and right sides, respectively, of the center high-beam light distribution pattern Hm. The left high-beam light distribution pattern Hl and the right high-beam light distribution pattern Hr may partially overlap the center high-beam light distribution pattern Hm.

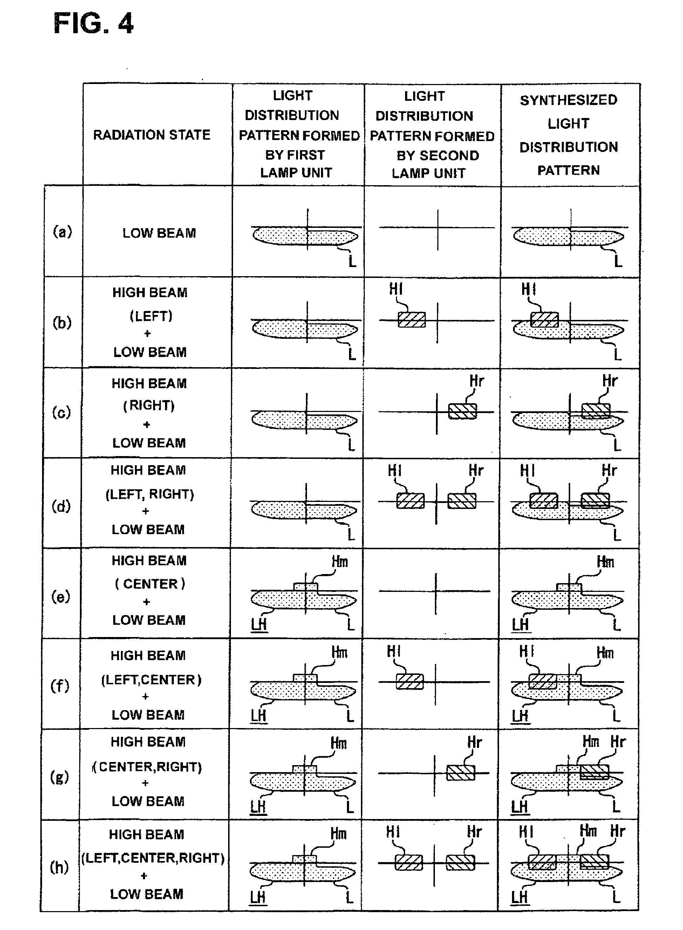

The state of radiation formed by turning on and off the first lamp unit 6 and the second lamp unit 7 is described below (see FIG. 4). In FIG. 4, light distribution patterns formed by the first lamp unit 6 are dotted, and light distribution patterns formed by the second lamp unit 7 are hatched.

When the first light source 14 is turned on and both the second light sources 18, 19 of the second lamp unit 7 are turned off in the state in which the movable portion 10b of the shade 10 provided in the first lamp unit 6 is not turned with respect to the stationary portion 10a, the low-beam light distribution pattern L is formed (see FIG. 4(a)).

When the first light source 14 and the second light source 18 of the second lamp unit 7 are turned on and the second light source 19 of the second lamp unit 7 is turned off in the state in which the movable portion 10b of the shade 10 provided in the first lamp unit 6 is not turned with respect to the stationary portion 10a, a light distribution pattern obtained by synthesizing the low-beam light distribution pattern L and the left high-beam light distribution pattern Hl is formed (see FIG. 4(b)).

When the first light source 14 and the second light source 19 of the second lamp unit 7 are turned on and the second light source 18 of the second lamp unit 7 is turned off in the state in which the movable portion 10b of the shade 10 provided in the first lamp unit 6 is not turned with respect to the stationary portion 10a, a light distribution pattern obtained by synthesizing the low-beam light distribution pattern L and the right high-beam light distribution pattern Hr is formed (see FIG. 4(c)).

When the first light source 14 and both the second light sources 18, 19 of the second lamp unit 7 are turned on in the state in which the movable portion 10b of the shade 10 provided in the first lamp unit 6 is not turned with respect to the stationary portion 10a, a light distribution pattern obtained by synthesizing the low-beam light distribution pattern L, the left high-beam light distribution pattern Hl, and the right high-beam light distribution pattern Hr is formed (see FIG. 4(d)).

When the first light source 14 is turned on and both the second light sources 18, 19 of the second lamp unit 7 are turned off in the state in which the movable portion 10b of the shade 10 provided in the first lamp unit 6 is turned with respect to the stationary portion 10a, the dual-beam light distribution pattern LH is formed (see FIG. 4(e)).

When the first light source 14 and the second light source 18 of the second lamp unit 7 are turned on and the second light source 19 of the second lamp unit 7 is turned off in the state in which the movable portion 10b of the shade 10 provided in the first lamp unit 6 is turned with respect to the stationary portion 10a, a light distribution pattern obtained by synthesizing the dual-beam light distribution pattern LH and the left high-beam light distribution pattern Hl is formed (see FIG. 4(f)).

When the first light source 14 and the second light source 19 of the second lamp unit 7 are turned on and the second light source 18 of the second lamp unit 7 is turned off in the state in which the movable portion 10b of the shade 10 provided in the first lamp unit 6 is turned with respect to the stationary portion 10a, a light distribution pattern obtained by synthesizing the duel-beam light distribution pattern LH and the right high-beam light distribution pattern Hr is formed (see FIG. 4(g)).

When the first light source 14 and both the second light sources 18, 19 of the second lamp unit 7 are turned on in the state in which the movable portion 10b of the shade 10 provided in the first lamp unit 6 is turned with respect to the stationary portion 10a, a light distribution pattern obtained by synthesizing the duel-beam light distribution pattern LH, the left high-beam light distribution pattern Hl, and the right high-beam light distribution pattern Hr is formed (see FIG. 4(h)).

Although the second lamp unit 7 includes the second light sources 18, 19 disposed on the heat radiation member 17 in the example described above, the second lamp unit may include light sources disposed inside a reflector, for example.

Although the second light sources 18, 19 are provided to form the left high-beam light distribution pattern Hl and the right high-beam light distribution pattern Hr on the left and right sides, respectively, of the center high-beam light distribution pattern Hm in the example described above, one or three or more high-beam light distribution patterns may be formed on the left and right sides of the center high-beam light distribution pattern Hm. In this case, there may be provided a number of second light sources that corresponds to the number of the high-beam light distribution patterns to be formed on the left and right sides of the center high-beam light distribution pattern Hm.

Moreover, the second lamp unit 7 (7A) of one vehicular headlamp 1, of vehicular headlamps 1, 1 respectively disposed on the left and right sides of a vehicle body, may be used as a lamp unit exclusively for forming the left high-beam light distribution pattern HI, and the second lamp unit 7 (7A) of the other vehicular headlamp 1 may be used as a lamp unit exclusively for forming the right high-beam light distribution pattern Hr.

Further, the second light sources 18, 19 of the second lamp units 7, 7A may be flashed on and off to call attention of pedestrians or the like.

In addition, the spectral characteristics of the light emitted from the second lamp units 7, 7A may be different from the spectral characteristics of the light emitted from the first lamp unit 6. For example, a light-emitting diode that emits blue light may be used as the second light sources 18, 19 of the second lamp units 7, 7A to improve the visibility with distinct light.

As has been described above, in the vehicular headlamp 1, the light emitted from the first light source 14 which forms the low-beam light distribution pattern L forms the center high-beam light distribution pattern Hm. Therefore, it is possible to prevent an increase in the number of light-emitting diodes (the second light sources 18, 19) for forming high-beam light distribution patterns, which secures an optimum radiation state according to the situation without increasing the production cost.

Moreover, the center high-beam light distribution pattern Hm which requires a high light intensity is formed by a light source that is different from a light-emitting diode. Therefore, it is possible to further reduce the production cost.

Further, two second light sources 18, 19 are provided, the two second light sources 18, 19 radiate a high beam to different areas, and the second light sources 18, 19 are individually controlled to turn on and off. Therefore, it is possible to secure an optimum radiation state according to the situation with an increased number of light distribution patterns.

In addition, a discharge lamp is used as the first light source 14, and the first lamp unit 6 is formed as a projector-type lamp unit. Therefore, it is possible to secure a high light intensity necessary for the light distribution patterns without increasing the production cost.

The shape and structure of various portions of the best mode for carrying out the invention described above are merely illustrative examples that may be used in embodying the present invention, and should not be construed as limiting the technical scope of the present invention as defined in the appended claims.

### [Description of the Reference Numerals]

- 1: VEHICULAR HEADLAMP
- 6: FIRST LAMP UNIT
- 7: SECOND LAMP UNIT
- 8: PROJECTION LENS
- 11: REFLECTOR
- 14: FIRST LIGHT SOURCE
- 18: SECOND LIGHT SOURCE
- 19: SECOND LIGHT SOURCE
- 7A: SECOND LAMP UNIT

## Claims

1. A vehicular headlamp (1) comprising:
a first lamp unit (6) that selectively radiates a dual-distance beam for radiating a close area (L) and a far area (Hm) or a low beam (L) for radiating a close area forwardly from a first light source (14); and
a second lamp unit (7) that radiates a high beam for radiating a far area (H1, Hr) forwardly from a second light source (18; 19),
wherein
a light distribution pattern of the dual-distance beam for radiating the far area (Hm) is formed at a position corresponding to a generally center portion in a lateral direction of a light distribution pattern of the dual-distance beam for radiating the close area (L);
**characterized in that**
two second light sources (18, 19) are provided in which a light-emitting diode is used,
the two second light sources (18, 19) radiate the high beam to different areas (HI, Hr),
wherein one of the areas (HI) is on the left side and the other one of the areas (Hr) is on the right side of the light distribution pattern of the dual-distance beam for radiating the far area (Hm), and **in that**
the two second light sources (18, 19) are individually controlled to turn on and off when the first light source (14) is turned on.

2. The vehicular headlamp (1) according to claim 1, **characterized in that**:
a discharge lamp is used as the first light source (14); and
the first lamp unit (6) includes a projection lens (8) that projects light emitted from the first light source (14) to radiate the light forwardly and a reflector (11) that reflects light emitted from the first light source (14) to direct the light to the projection lens (8).

## Patentansprüche

1. Fahrzeugscheinwerfer (1) mit:
einer ersten Lampeneinheit (6), die selektiv ein Zweidistanzlicht zum Beleuchten eines Nahbereichs (L) und eines Fernbereichs (Hm) oder ein Abblendlicht (L) zum Beleuchten eines Nahbereichs von einer ersten Lichtquelle (14) nach vorne ausstrahlt; und
einer zweiten Lampeneinheit (7), die ein Fernlicht zum Beleuchten eines Fernbereiches (H1, Hr) von einer zweiten Lichtquelle (18; 19) nach vorne ausstrahlt,
wobei ein Lichtverteilungsmuster des Zweidistanzlichtes zum Beleuchten des Fernbereiches (Hm) an einer Position, die einer allgemeinen Zentrumsposition in einer Längsrichtung eines Lichtverteilungsmusters des Zweidistanzlichts zum Beleuchten des Nahbereiches (L) entspricht, ausgebildet wird;
**dadurch gekennzeichnet, dass**
zwei zweite Lichtquellen (18, 19), in denen eine lichtemittierende Diode verwendet wird, vorgesehen sind,
die zwei zweiten Lichtquellen (18, 19) das Fernlicht in verschiedene Bereiche (H1, Hr) ausstrahlen,
wobei einer der Bereiche (H1) auf der linken Seite und der andere der Bereiche (Hr) auf der rechten Seite des Lichtverteilungsmusters des Zweidistanzlichts zum Beleuchten des Fernbereiches (Hm) liegt, und dadurch, dass
die zwei zweiten Lichtquellen (18, 19) individuell gesteuert sind, um an- und auszuschalten, wenn die erste Lichtquelle (14) angeschaltet wird.

2. Fahrzeugscheinwerfer (1) gemäß Anspruch 1, **dadurch gekennzeichnet, dass**:
eine Entladungslampe als die erste Lichtquelle (14) verwendet wird; und die erste Lampeneinheit (6) eine Projektionslinse (8), die Licht, das von der ersten Lichtquelle (14) abgegeben wurde, projiziert, um das Licht nach vorne auszustrahlen und einen Reflektor (11), der Licht, das von der ersten Lichtquelle (14) abgegeben wurde, reflektiert, um das Licht zu der Projektionslinse (8) zu lenken, aufweist.

## Revendications

1. Phare de véhicule (1) comprenant :
une première unité de lampe (6) qui irradie sélectivement un feu bi-distance pour éclairer une zone proche (L) et une zone éloignée (Hm) ou un feu de croisement (L) pour éclairer une zone proche vers l'avant depuis une première source de lumière (14) ; et
une deuxième unité de lampe (7) qui irradie un feu de route pour éclairer une zone éloignée (Hl, Hr) vers l'avant depuis une deuxième source de lumière (18, 19),
dans lequel
un motif de distribution de lumière du feu bi-distance pour éclairer la zone éloignée (Hm) est formé à une position correspondant à une partie globalement centrale dans une direction latérale d'un motif de distribution de lumière du feu bi-distance pour éclairer la zone proche (L) ;
**caractérisé en ce que**
deux deuxièmes sources de lumière (18, 19) sont prévues dans lesquelles une diode électroluminescente est utilisée,
les deux deuxièmes sources de lumière (18, 19) irradient le feu de route à différentes zones (Hl, Hr),
dans lequel l'une des zones (H1) se trouve sur le côté gauche et l'autre des zones (Hr) se trouve sur le côté droit du motif de distribution de lumière du feu bi-distance pour éclairer la zone éloignée (Hm), et **en ce que**
les deux deuxièmes sources de lumière (18, 19) sont individuellement commandées pour s'allumer et s'éteindre lorsque la première source de lumière (14) est allumée.

2. Phare de véhicule (1) selon la revendication 1, **caractérisé en ce que** :
une lampe à décharge est utilisée en tant que première source de lumière (14) ; et
la première unité de lampe (6) comporte une lentille de projection (8) qui projette de la lumière émise à partir de la première source de lumière (14) pour irradier la lumière vers l'avant et un réflecteur (11) qui réfléchit la lumière émise à partir de la première source de lumière (14) afin de diriger la lumière vers la lentille de projection (8).
